# EUROPEAN PATENT APPLICATION

(11) **EP 3 133 504 A2**
(43) Date of publication of application: **22.02.2017**
(21) Application number: 16183633.3
(22) Date of filing: 10.08.2016
(51) Int. Cl.: G06F 17/27

(54) **METHOD AND DEVICE FOR KNOWLEDGE BASE CONSTRUCTION**

(30) Priority: 20.08.2015 CN 201510515887
(71) Applicant: Xiaomi Inc., Beijing 100085 (CN)
(72) Inventor: Wang, Pingze, Beijing, 100085 (CN); Chen, Zhijun, Beijing, 100085 (CN); Long, Fei, Beijing, 100085 (CN)
(74) Representative: Delumeau, François Guy

(57) **Abstract**

The disclosure relates to a method and device for knowledge base construction, wherein the method for knowledge base construction comprising: retrieving (S101) text corpuses, and determining whether the text corpuses include first information according to a predefined property description pattern, wherein the first information includes property information of entities in a predefined entity set; and extracting (S102) first information, if the first information is determined to be included in the text corpuses, and constructing the knowledge base based on the first information and an entity corresponding to the first information. Embodiments of the disclosure save manpower and improve the speed of knowledge base construction, by knowledge mining without manual work during the knowledge base construction.

## Description

### TECHNICAL FIELD

The present disclosure generally relates to the field of artificial intelligence, and more particularly to a method and device for knowledge base construction.

### BACKGROUND

Named Entity Recognition (simplified as NER), also called "exclusive name recognition", refers to recognition of the entities with a particular sense in the text, mainly including person names, geography names, institution names, and exclusive nouns, etc.

For example, nutrient value of food is a special named entity, which comprises the name and content of nutrients, such as "carbohydrate", "20 grams".

At the moment, there are usually introductions to the nutrient value of food in forums, comments, blogs, news and Encyclopedia, and the information is important for the construction of knowledge base for the nutrient value of food. However, if knowledge mining is performed by manpower, it will cost much manpower and the construction of the knowledge base will be slow.

### SUMMARY

A method and device for knowledge base construction are provided in the embodiments of the disclosure, which are used to solve the issue that it is a waste of manpower and the speed is slow if a knowledge base is constructed by manpower.

According to a first aspect, the invention relates to a method for knowledge base construction, wherein the method comprises: retrieving text corpuses, and determining whether the text corpuses include first information according to a predefined property description pattern, wherein the first information includes property information of entities in a predefined entity set; and extracting first information, if the first information is determined to be included in the text corpuses, and constructing the knowledge base based on the first information and an entity corresponding to the first information.

In an embodiment, the predefined property description pattern includes vocabularies, sentence patterns or any combination thereof for determining whether the text corpuses include the first information; the step of determining whether the text corpuses include the first information according to the predefined property description pattern comprising: screening out, from the text corpuses, a first sentence set including the entities in the predefined entity set, according to an algorithm for Named Entity Recognition; retrieving first candidate information from the first sentence set according to the vocabularies, sentence patterns, or the combination thereof in the predefined property description pattern, wherein the first candidate information includes the property information of the entities in the predefined entity set; and counting an occurrence number of the first candidate information, and determining the first candidate information as the first information when the occurrence number is larger than a predefined threshold.

In an embodiment, the predefined property description pattern includes vocabularies, sentence patterns or any combination thereof for determining whether the text corpuses include the first information; the step of determining whether the text corpuses include the first information according to the predefined property description pattern comprising: screening out, from the text corpuses, a first sentence set including the entities in the predefined entity set according to an algorithm for Named Entity Recognition; retrieving, from the first sentence set, a plurality of first candidate information according to the predefined property description pattern, wherein the plurality of first candidate information include the property information of the entities; combining the entities included in the first sentence set and the corresponding plurality of first candidate information into a set of two-tuples; and counting an occurrence number of each of the first candidate information, deleting two-tuples in which the first candidate information whose occurrence number is smaller than a predefined threshold exists, and determining elements included in the current set of two-tuples as the first information.

In an embodiment, the method further comprises: determining whether the text corpuses include second information according to the predefined property description pattern and the first information, wherein the second information includes the property information of the first information; extracting the second information if it is determined to be included in the text corpuses, and updating the knowledge base based on the first information, the second information, and the entity corresponding to the first information.

In an embodiment, the step of determining whether the text corpuses include the second information according to the predefined property description pattern and the first information comprises: retrieving, from the text corpuses, a second sentence set including the first information according to the predefined property description pattern; when the second sentence set includes a numerical entity, extracting the numerical entity as second candidate information; combining the entity, the first information and the second information into a set of triples; and for each of the first information of each entity in the current set of triples, counting an occurrence number of each of the corresponding second candidate information, and determining second candidate information whose occurrence number is the largest as the second information of the current first information of the current entity.

In an embodiment, the predefined property description pattern includes one or more of: content of *, <contain | contains> <#NUM> grams of *, * is <contained | included | contained rich> <in | within> *, where "*" is a wildcard character for matching any string, "|" is a symbol indicating "or", "<#NUM> " is a symbol for matching a numerical string, and "<" and ">" appear in pairs to contain multiple synonyms.

According to a second aspect, the invention relates to a device for knowledge base construction, wherein the device comprises: a retrieving and determining module, configured to retrieve text corpuses, and determining whether the text corpuses include a first information according to a predefined property description pattern, wherein the first information includes property information of entities in a predefined entity set; and a first determining, extracting and adding module, configured to extract first information, if the first information is determined to be included in the text corpuses, and construct the knowledge base based on the first information and an entity corresponding to the first information.

In an embodiment, the predefined property description pattern includes vocabularies, sentence patterns or any combination thereof for determining whether the text corpuses include the first information; wherein the retrieving and determining module comprises: a screening sub-module, configured to screen out, from the text corpuses, a first sentence set including the entities in the predefined entity set, according to an algorithm for Named Entity Recognition; a retrieving sub-module, configured to retrieve a first candidate information from the first sentence set according to the vocabularies, sentence patterns, or the combination thereof in the predefined property description pattern, wherein the first candidate information includes the property information of the entities in the predefined entity set; and a counting and determining sub-module, configured to count an occurrence number of the first candidate information, and determine the first candidate information as the first information when the occurrence number is larger than a predefined threshold.

In an embodiment, the predefined property description pattern includes vocabularies, sentence patterns or any combination thereof for determining whether the text corpuses include the first information; wherein the retrieving and determining module comprises: a screening sub-module, configured to screen out, from the text corpuses, a first sentence set including the entities in the predefined entity set, according to an algorithm for Named Entity Recognition; a retrieving sub-module, configured to retrieve a first candidate information from the first sentence set according to the vocabularies, sentence patterns, or the combination thereof in the predefined property description pattern, wherein the first candidate information includes the property information of the entities in the predefined entity set; and a counting and determining sub-module, configured to count an occurrence number of the first candidate information, and determine the first candidate information as the first information when the occurrence number is larger than a predefined threshold.

In an embodiment, the device further comprises: a determining module, configured to determine whether the text corpuses include second information according to the predefined property description pattern and the first information, wherein the second information includes the property information of the first information; and a second determining, extracting and adding module, configured to extract the second information if it is determined to be included in the text corpuses, and update the knowledge base based on the first information, the second information, and the entity corresponding to the first information.

In an embodiment, the determining module comprises: a retrieving sub-module, configured to retrieve, from the text corpuses, a second sentence set including the first information according to the predefined property description pattern; an extracting sub-module, configured to extract a numerical entity as second candidate information when the second sentence set includes the numerical entity; a combining sub-module, configured to combine the entity, the first information and the second information into a set of triples; and a counting and determining sub-module, configured to for each of the first information of each entity in the current set of triples, count an occurrence number of each of the corresponding second candidate information, and determine second candidate information whose occurrence number is the largest as the second information of the current first information of the current entity.

In an embodiment, the predefined property description pattern includes one or more of: content of *, <contain | contains> <#NUM> grams of *, * is <contained | included | contained rich> <in | within> *, where "*" is a wildcard character for matching any string, "|" is a symbol indicating "or", "<#NUM> " is a symbol for matching a numerical string, and "<" and ">" appear in pairs to contain multiple synonyms.

According to a third aspect, the invention relates to a device for knowledge base construction, wherein the device comprises: a processor; and a memory for storing processor-executable instructions; wherein the processor is configured to:
retrieving text corpuses, and determining whether the text corpuses include first information according to a predefined property description pattern, wherein the first information includes property information of entities in a predefined entity set; and extracting first information, if the first information is determined to be included in the text corpuses, and constructing the knowledge base based on the first information and an entity corresponding to the first information.

In one particular embodiment, the steps of the method for knowledge base construction are determined by computer program instructions.

Consequently, according to a fourth aspect, the invention is also directed to a computer program for executing the steps of a method for knowledge base construction as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a hard disk.

Alternatively, the information medium can be an integrated circuit in which the program is incorporated, the circuit being adapted to execute the method in question or to be used in its execution.

The technical solution provided in the embodiments of the disclosure may have the following advantageous: the knowledge base may be automatically constructed by retrieving text corpuses, extracting first information if it is determined that the text corpuses include the first information, and constructing the knowledge base according to the first information and a corresponding entity. The process of knowledge mining need not be performed by manpower, and thus the manpower is saved and the speed of knowledge base construction is improved.

For example, the disclosure may efficiently remove matters which do not belong to nutritional components of food by counting an occurrence number of the retrieved first candidate information and determining the first candidate information whose occurrence number is larger than the predefined threshold as the first information (i.e., the first candidate information with few occurrence is removed) .Therefore, accuracy of the knowledge base is improved.

The relationship between the entities and the first information is clarified by being illustrated in the form of two-tuples, and thus the first information corresponding to invalid entities may be easily deleted.

If the second information, such as the content of the nutrient of food, is determined to be included in the text corpuses, the second information may be extracted from the text corpuses, and the knowledge base is updated according to the first information, the second information and the entity corresponding to the first information, and thus the knowledge base is improved.

The relationship among the entities, the first information and the second information may be clarified by being illustrated in the form of triples, and thus the second information corresponding to the first information may be more easily to be retrieved, for example, the content related to the nutrient of food is more easily to be retrieved, and thus the accuracy of the second information is improved, and in turn the accuracy of the knowledge base is also improved. Multiple contents of the predefined property description pattern is provided to facilitate the first information to be screened out from the text corpuses subsequently.

It is to be understood that both the foregoing general description and the following detailed description are intended to be exemplary and explanatory only and are not intended to be limiting.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
FIG. 1 is a flow chart showing a method for knowledge base construction, according to an exemplary embodiment.
FIG. 2 is a flow chart showing another method for knowledge base construction, according to an exemplary embodiment.
FIG. 3 is a scenario view showing a method for knowledge base construction, according to an exemplary embodiment.
FIG. 4 is a flow chart showing a method for determining whether text corpuses include first information, according to an exemplary embodiment.
FIG. 5 is a flow chart showing another method for determining whether the text corpuses include the first information, according to an exemplary embodiment.
FIG. 6 is a flow chart showing a method for determining whether the text corpuses include second information, according to an exemplary embodiment.
FIG. 7 is a schematic diagram illustrating a device for knowledge base construction, according to an exemplary embodiment.
FIG. 8 is a schematic diagram illustrating another device for knowledge base construction, according to an exemplary embodiment.
FIG. 9 is a schematic diagram illustrating another device for knowledge base construction, according to an exemplary embodiment.
FIG. 10 is a schematic diagram illustrating another device for knowledge base construction, according to an exemplary embodiment.
FIG. 11 is a schematic diagram illustrating another device for knowledge base construction, according to an exemplary embodiment.
FIG. 12 is a schematic diagram illustrating a device for knowledge base construction, according to an exemplary embodiment.

### DETAILED DESCRIPTION

Reference will now be made in detail to exemplary embodiments, examples of which are illustrated in accompanying drawings. The following description refers to the accompanying drawings in which the same numbers in different drawings represent the same or similar elements unless otherwise indicated. The implementations set forth in the following description of exemplary embodiments do not represent all implementations consistent with the invention. Instead, they are merely examples of devices and methods consistent with aspects related to the invention as recited in the appended claims.

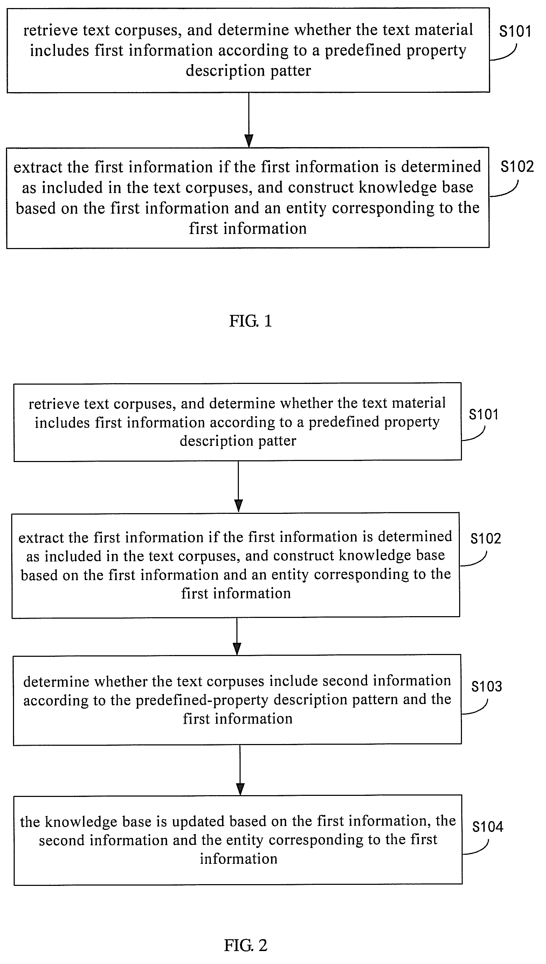

FIG. 1 is a flow chart showing a method for knowledge base construction, according to an exemplary embodiment. As shown in FIG. 1, the method for knowledge base construction may be applied to a server. The method includes following steps S101- S102.

In step S101, retrieving text corpuses, and determining whether the text corpuses include first information according to a predefined property description pattern.

In the embodiment, the predefined property description pattern may include vocabularies, sentence patterns or any combination thereof for determining whether the text corpuses include the first information; and the first information may include property information of the entities in the predefined entity set;

In an embodiment, the entities in the predefined entity set may comprise, but not limited to, food, air, sports or the like, wherein property information of food may be nutrients, property information of air may be constituents, and property information of sports may be energy cost per hour, etc. As can be seen, the first information may comprise, but not limited to, the nutrients of food.

In an example wherein the entity is food and a knowledge base about nutritive values of food will be constructed, the predefined property description pattern may include, but not limited to, one or more of the patterns below:
content of * (e.g. the content of sugar), <contain | contains> <#NUM> grams of * (e.g., contain 20 grams of carbohydrate), * is <contained | included | contained rich> <in | within> * (e.g., vitamin C is contained rich in a kiwifruit). For instance, "*" is a wildcard character for matching any string, "|" is a symbol indicating "or", "<#NUM> " is a symbol for matching a numerical string, and "<" and ">" appear in pairs to contain multiple synonyms. For example, "<contain | contains> <#NUM> grams of *" indicates that "contains <#NUM> grams of *" or "contain <#NUM> grams of *".

In the embodiment, the server may crawl the text corpuses by a web crawler, and determine whether the text corpuses contain the nutrients of food according to the predefined property description pattern.

It is recalled that a web crawler is an Internet bot which systematically browses the worldwide web, typically for the purpose of web indexing.

In step S102, the first information is extracted when determined to be included in the text corpuses, , and the knowledge base is constructed based on the first information and the corresponding entity.

In the embodiment, if it is determined that the text corpuses contain the nutrients of food, the nutrients may be extracted, and stored into the database in conjunction with the relevant food.

In the above embodiment of the method for knowledge base construction, the knowledge base may be automatically constructed by retrieving text corpuses, extracting first information if it is determined that the text corpuses include the first information, and constructing the knowledge base according to the first information and a corresponding entity. The process of knowledge mining need not be performed by manpower, and thus the manpower is saved and the speed of knowledge base construction is improved.

FIG. 2 is a flow chart showing another method for knowledge base construction, according to an exemplary embodiment. As shown in FIG. 2, there may be steps S103- S104 after step S102.

In step S103, it is determined whether the text corpuses include second information according to the predefined property description pattern and the first information.

Wherein, the second information includes the property of the first information. For example, if the first information is the nutrients of food, the property of the first information may be the content of the nutrients, i.e., the second information may be the content of the nutrients.

In the embodiment, it may be determined whether the text corpuses include the content of the nutrients of food, according to the above predefined property description pattern and the nutrients of food.

In step S104, the second information is extracted if it is determined to be contained in the text corpuses, and the knowledge base is updated based on the first information, the second information and the entity corresponding to the first information.

In the embodiment, if it is determined that the text corpuses include the second information, such as the content of the nutrients of food, the second information may be extracted from the text corpuses, and the knowledge base is constructed in accordance with the first information, the second information and the entity corresponding to the first information, and thus the knowledge base construction is completed.

In the embodiment of the method for the knowledge base construction, the second information is extracted if it is determined to be included in the text corpuses, and the knowledge base is constructed in accordance with the first information, the second information and the entity corresponding to the first information, and thus the knowledge base construction is improved.

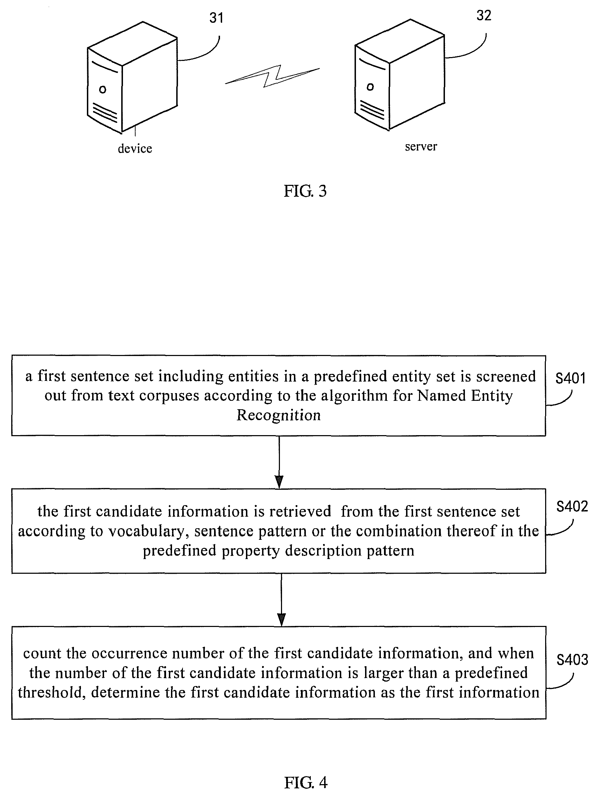

Take the construction of a knowledge base about the nutrients of food for example, and the disclosure is exemplarily illustrated in conjunction with FIG. 3 below.

As shown in FIG. 3, a device 31 may crawl the text corpuses in webpage by Crawler. In the embodiment, the device 31 may be a device, such as a server, a personal computer (PC), etc., while the disclosure is not limited herein. In an embodiment, a server 32 may be a web server of Wiki, Baidu, Sina, or Neteasy and so forth. The device 31 retrieves the text corpuses including the name of food according to an algorithm for Named Entity Recognition. It is determined whether the retrieved text corpuses include the nutrients of food according to a predefined property description pattern. If the nutrients of food are included, it will be extracted, and the knowledge base for the nutrients of food is constructed according to the food and the corresponding nutrients. The device 31 may also determine whether the text corpuses include the content of the nutrients of food according to the predefined property description pattern and the nutrients of food. The content of the nutrients of food is extracted if it is included in the text corpuses, and added correspondingly into the knowledge base so as to construct the knowledge base for nutritive values of food.

FIG. 4 is a flow chart showing a method for determining whether the text corpuses include the first information, according to an exemplary embodiment.

In step 401, a first sentence set including entities of a predefined entity set is screened out from the text corpuses according to the algorithm for Named Entity Recognition.

In an embodiment, the algorithm for Named Entity Recognition may include, but not limited to, Conditional Random Field (CRF), dictionary method and a hybrid method. The predefined entity set may include such as a set of food, a set of air and a set of sports.

Take the set of food as an example of the predefined entity set. The first sentence set including food may be screened out from the text corpuses based on the CRF method. In the embodiment, the first sentence set including food may also be screened out based on a keyword recognition algorithm, etc.

In step S402, the first candidate information is retrieved from a first sentence set according to the vocabulary, sentence pattern, or the combination thereof in the predefined property description pattern, wherein the first candidate information includes the property information of the entities in the predefined entity set;

Wherein, the predefined property description pattern may be lexico-syntactic patterns. The lexico-syntactic patterns include one or more of the following patterns: content of * (e.g. the content of sugar), <contain | contains> <#NUM> grams of * (e.g., contain 20 grams of carbohydrate), * is <container | included | contained rich> <in | within> * (e.g., vitamin C is contained rich in kiwifruit).

After screening out the first sentence set including food, the candidate nutrients may be extracted from the first sentence set according to the predefined property description pattern. For example, the candidate nutrients retrieved from tomatoes are carotene, vitamin C, natrium, calcium; the candidate nutrients retrieved from carrots are carotene, vitamin C, natrium, sugar; the candidate nutrients retrieved from beefs are kalium, phosphorus, natrium, calcium, stone; and so forth.

In step S403, counting the occurrence number of the first candidate information, and when the occurrence number of the first candidate information is larger than a predefined threshold, determine the first candidate information as the first information.

The predefined threshold may be flexibly set as required. In an embodiment, the predefined threshold may be set to be 1 to 10, but the disclosure is not limited herein. The predefined threshold may also be set to be greater than 10 according to a specific application situation.

In the embodiment, assuming that the predefined threshold is 2, if the occurrence number of stone is 1, while the occurrence number of each of the other candidate nutrients is larger than 1 after counting the occurrence number of each of the candidate nutrients, the other candidate nutrients are determined as nutrients. As such, the matter not belonging to the nutrients of food may be removed efficiently.

But the disclosure is not limited herein, and step S403 may also be implemented as:
counting the occurrence number of the first candidate information, and if the occurrence number of the first candidate information is smaller than a predefined threshold, the first candidate information is determined not to be the first information; otherwise the first candidate information is determined to be the first information.

In the embodiment, the predefined threshold may be set such as 10, but the disclosure is not limited herein. The predefined threshold may also be set to be larger or smaller than 10 according to the specific application situation.

In the embodiment, if the occurrence number of stone is 1, while the occurrence number of each of the other candidate nutrients is larger than 10 after counting the occurrence number of each of the candidate nutrients, the other candidate nutrients are determined to be the nutrients while stone is determined not to be a nutrient. As such, the matter not belonging to the nutrients of food may be removed efficiently.

As can be seen, whether the text corpuses include the first information may be determined by the above process.

In the above embodiment, the occurrence number of the retrieved first candidate information is counted, and the first candidate information whose occurrence number is larger than the predefined threshold is determined to be the first information , i.e., the first candidate information whose occurrence number is small is removed, and thus the matter not belonging to nutrients is removed efficiently and the accuracy of the knowledge base is improved.

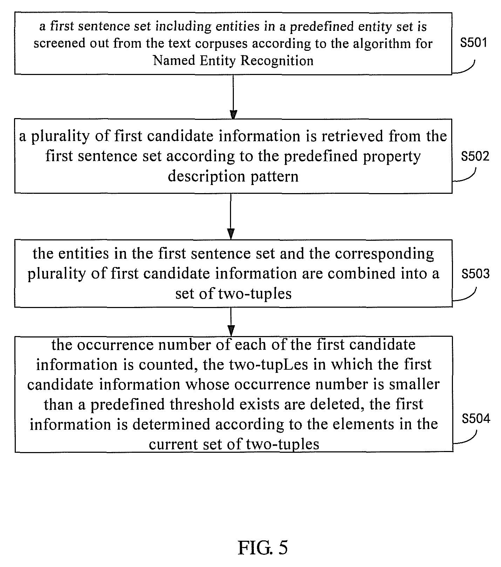

FIG. 5 is a flow chart showing another method for determining whether the text corpuses include the first information, according to an exemplary embodiment. As shown in FIG. 5, the method comprises following steps.

In step 501, a first sentence set including entities in a predefined entity set is screened out from the text corpuses according to the algorithm for Named Entity Recognition.

In step S502, a plurality of first candidate information is retrieved from the first sentence set according to the predefined property description pattern, wherein the first candidate information includes property information of the entities.

In step 503, the entities in the first sentence set and the corresponding plurality of first candidate information are combined into a set of two-tuples.

Assuming that the predefined entity set is a set of food entities E, a sentence set including E may be screened out from the text corpuses, wherein the matched entity is Eᵢ. From the context in the sentence, the candidate nutrients NC are retrieved by lexico-syntactic pattern and combined into a set of two-tuples T. Each element in the set of two-tuples T is of the form of (Eᵢ, NCᵢⱼ), wherein candidate nutrients corresponding to Eᵢ is {NCᵢ₁, NCᵢ₂... NCᵢₙ}.

In step S504, the occurrence number of each first candidate information is counted; the two-tuples in which the first candidate information whose occurrence number is smaller than a predefined threshold exists are deleted; the first information is determined according to the elements in the current set of two-tuples.

The occurrence number of each nutrient NCᵢⱼ is counted; the two-tuples in which the first candidate information whose occurrence number is smaller than a predefined threshold (such as, 2) exists are deleted, so as to generate a new set of two-tuples T; and the elements included in the current set of two-tuples are determined to be the first information.

In the embodiment, the relationship between the entities and the first information is clarified by illustrated in the form of two-tuples, and thus the first information corresponding to invalid entities is easily deleted.

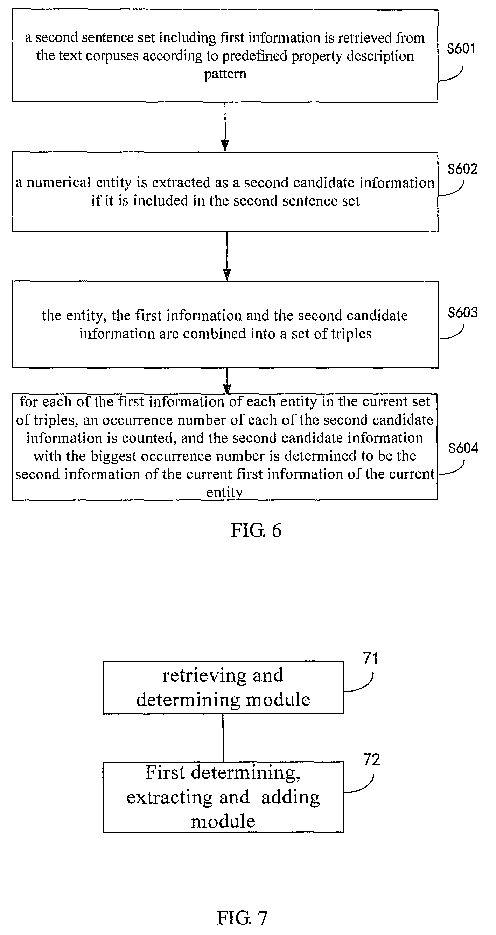

FIG. 6 is a flow chart showing a method for determining whether the text corpuses include the second information, according to an exemplary embodiment. As shown in FIG. 6, the method comprises following steps.

In step S601, a second sentence set including the first information is retrieved from the text corpuses according to the predefined property description pattern.

In the embodiment, the second sentence set including the nutrients of food may be retrieved according to the lexico-syntactic pattern.

For example, a sentence set with Eᵢ and NCᵢⱼ in its context may be screened out from the text corpuses.

In step S602, a numerical entity is extracted to be the second candidate information if it is included in the second sentence set.

Since the content of the nutrient is generally a numerical value, such as "80 grams", "70%", the numerical entity may be extracted from the second sentence set, in order to achieve the second candidate information.

In addition, the content of nutrient is often measured based on per 100 grams, such as "the banana is of high nutrient, while 20 grams of carbohydrate, 1.2 grams of protein, 0.6 gram of fat are contained per 100 grams".

In step S603, the entity, the first information and the second candidate information are combined into a set of triples.

In step S604, for each of the first information of each entity in the current set of triples, an occurrence number of each of the relevant second candidate information is counted, and the second candidate information with the biggest occurrence number is determined to be the second information of the current first information of the current entity.

In the embodiment, the entity, the first information and the second candidate information may be combined into a set of triples. After that, for each of the first information of each entity in the current set of triples, an occurrence number of each of the relevant second candidate information is counted, and the second candidate information with the biggest occurrence number is determined to be the second information of the current first information of the current entity.

For example, after the numerical entity is extracted from the second sentence set, the set Tᵣ of triples may be created, and the elements in the set are of the form (Eᵢ, NCᵢⱼ, Vᵢⱼₖ), wherein the content of candidate nutrient NCᵢⱼ corresponding to Eᵢ is { Vᵢⱼ₁, Vᵢⱼ₂...Vᵢⱼₘ}. After that, for the content Vᵢⱼₖ of each nutrient NCᵢⱼ of each Eᵢ, a number that it occurs in { Vᵢⱼ₁, Vᵢⱼ₂...Vᵢⱼₘ} is counted; only the triples where the occurrence number of Vᵢⱼₖ is the largest is retained, while all the other Vᵢⱼᵣ are deleted from { Vᵢⱼ₁, Vᵢⱼ₂...Vᵢⱼₘ}, that is, all the other Vᵢⱼᵣ are deleted from the set of triples Tᵣ, so as to generate a new set of triples Tᵣ. The candidate content included in the current Tᵣ is determined as the content of the corresponding nutrient of food.

The relationship among the entities, the first information and the second information is clarified by illustrated in the form of triples, and thus the second information corresponding to the first information is more easily to be retrieved, for example, the content corresponding to the nutrients of food is more easily to be retrieved.

Assuming that the occurrence number extracted from the text corpuses of "the content of vitamin A in tomatoes is 10 grams" is 50, the occurrence number of "the content of vitamin A in tomatoes is 8 grams" is 10, and the occurrence number of "the content of vitamin A in tomatoes is 1 gram" is 3. Since 50 is the largest number, the content of vitamin A in tomatoes is 10 grams.

In the above embodiment, the occurrence number of the retrieved second candidate information is counted, and the one with the largest occurrence number is determined to be the second information. Therefore, the accuracy of the second information is improved, and in turn the accuracy of the knowledge base is improved.

In accordance with the above embodiments of methods for knowledge base construction, embodiments of devices for knowledge base construction are also provided.

FIG. 7 is a schematic diagram illustrating a device for knowledge base construction, according to an exemplary embodiment. Referring to FIG. 7, the device includes a retrieving and determining module 71 and a first determining, extracting and adding module 72.

The retrieving and determining module 71 is configured to retrieve text corpuses, and determining whether the text corpuses include a first information according to a predefined property description pattern, wherein the first information includes property information of entities in a predefined entity set.

The first determining, extracting and adding module 72 is configured to extract first information, if the first information is determined to be included in the text corpuses, and construct the knowledge base based on the first information and an entity corresponding to the first information.

A process for the device shown in FIG. 7 to construct the knowledge base may refer to the embodiment of method shown in FIG. 1, and is omitted herein.

In the above embodiment of the device for knowledge base construction, the text corpuses are retrieved by the retrieving and determining module; the first information is extracted by the first determining, extracting and adding module when included in the text corpuses; and the knowledge base is constructed according to the first information and the corresponding entities. As can be seen, the knowledge base may be constructed automatically, without knowledge digging performed by manpower, and thus the manpower is saved and the speed of knowledge base construction is improved.

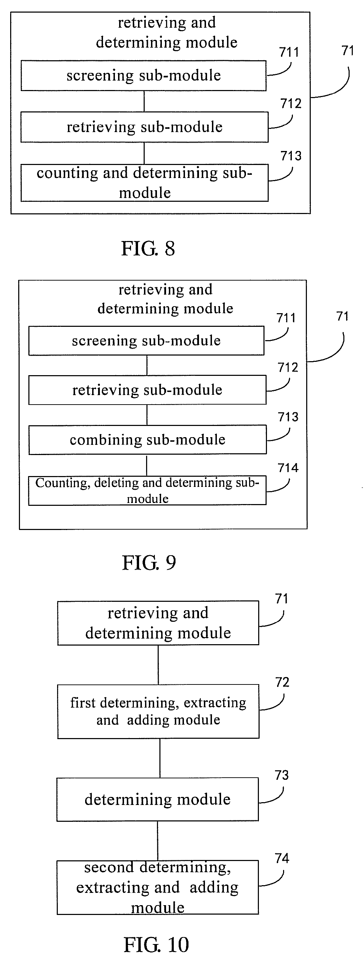

FIG. 8 is a schematic diagram illustrating another device for knowledge base construction, according to an exemplary embodiment. As shown in FIG. 8, on the basis of the embodiment shown in FIG. 7, the retrieving and determining module 71 may comprise a screening sub-module 711, a retrieving sub-module 712 and a counting and determining sub-module 713.

The screening sub-module 711 is configured to screen out, from the text corpuses, a first sentence set including the entities in the predefined entity set, according to an algorithm for Named Entity Recognition.

The retrieving sub-module 712 is configured to retrieve a first candidate information from the first sentence set according to the vocabularies, sentence patterns, or the combination thereof in the predefined property description pattern, wherein the first candidate information includes the property information of the entities in the predefined entity set.

The counting and determining sub-module 713 is configured to count an occurrence number of the first candidate information, and determine the first candidate information as the first information when the occurrence number is larger than a predefined threshold.

A process for the device shown in FIG. 8 to construct the knowledge base may refer to the embodiment of method shown in FIG. 2, and is omitted herein.

In the above embodiment, the occurrence number of the retrieved first candidate information is counted by the counting and determining sub-module; and the first candidate information is determined to be the first information when the occurrence number is larger than a predefined threshold, that is, the first candidate information with few occurrence is removed; and thus the matter not belonging to nutrients of food is removed efficiently and the accuracy of the knowledge base is enhanced.

FIG. 9 is a schematic diagram illustrating another device for knowledge base construction, according to an exemplary embodiment. As shown in FIG. 9, on the basis of the embodiment shown in FIG. 7, the retrieving and determining module 71 may comprise a screening sub-module 711, a retrieving sub-module 712, a combining sub-module 713, and a counting, deleting and determining sub-module 714.

The screening sub-module 711 is configured to screen out, from the text corpuses, a first sentence set including the entities in the predefined entity set according to an algorithm for Named Entity Recognition.

The retrieving sub-module 712 is configured to retrieve a plurality of first candidate information from the first sentence set gained by the filtering sub-module 711 according to the predefined property description pattern, wherein the first candidate information includes the property information of the entities.

The combining sub-module 713 is configured to combine the entities included in the first sentence set and the corresponding plurality of first candidate information into a set of two-tuples.

The counting, deleting and determining sub-module 714 is configured to count an occurrence number of each of the first candidate information, delete two-tuples in which the first candidate information whose occurrence number is smaller than a predefined threshold exists, and determine elements included in the current set of two-tuples as the first information.

Wherein, the predefined property description pattern comprises vocabularies, sentence patterns or any combination thereof for determining whether the text corpuses include the first information.

A process for the device shown in FIG. 9 to construct the knowledge base may refer to the embodiment of method shown in FIG. 5, and is omitted herein.

In the above embodiment, the relationship between the entities and the first information is clarified by illustrated in the form of two-tuples, and thus the first information corresponding to invalid entities is more easily deleted.

FIG. 10 is a schematic diagram illustrating another device for knowledge base construction, according to an exemplary embodiment. As shown in FIG. 10, on the basis of the embodiment shown in FIG. 7, the device for knowledge base construction may also include a determining module 73 and a second determining, extracting and adding module 74.

The determining module 73 is configured to determine whether the text corpuses include second information according to the predefined property description pattern and the first information, wherein the second information includes the property information of the first information.

The second determining, extracting and adding module 74 is configured to extract the second information if it is determined to be included in the text corpuses, and update the knowledge base based on the first information, the second information, and the entity corresponding to the first information.

A process for the device shown in FIG. 10 to construct the knowledge base may refer to the embodiment of method shown in FIG. 2, and is omitted herein.

In the embodiment of the device for the knowledge base construction, whether the text corpuses include second information is determined by the determining module; the second information is extracted by the second determining, extracting and adding module, if it is determined to be included in the text corpuses; and the knowledge base is constructed based on the first information, the second information and the entities corresponding to the first information. Therefore, the knowledge base construction is improved.

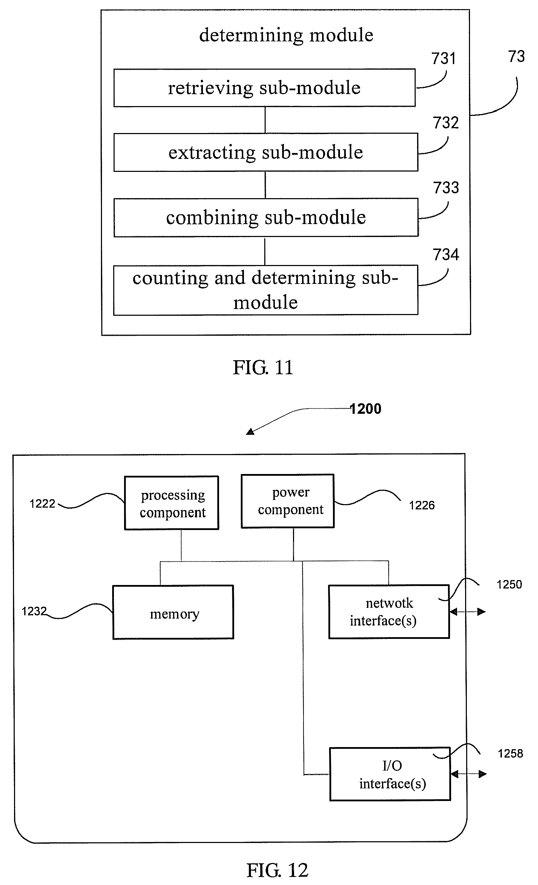

FIG. 11 is a schematic diagram illustrating another device for knowledge base construction, according to an exemplary embodiment. As shown in FIG. 11, on the basis of the embodiment shown in FIG. 10, the determining module 73 may comprise a retrieving sub-module 731, an extracting sub-module 732, a combining sub-module 733, and a counting and determining sub-module 734.

The retrieving sub-module 731 is configured to retrieve, from the text corpuses, a second sentence set including the first information according to the predefined property description pattern.

The extracting sub-module 732 is configured to extract a numerical entity as a second candidate information when the second sentence set retrieved by the retrieving sub-module 731includes the numerical entity.

The combining sub-module 733 is configured to combine the entities, the first information, and the second candidate information extracted by the extracting sub-module 732 into a set of triples.

The counting and determining sub-module 734 is configured to for each of the first information of each entity in the current set of triples combined by the combining sub-module 733, count an occurrence number each of the corresponding second candidate information, and determine second candidate information whose occurrence number is the largest as the second information of the current first information of the current entity.

A process for the device shown in FIG. 11 to construct the knowledge base may refer to the embodiment of method shown in FIG. 6, and is omitted herein.

In the above embodiment, the relationship among the entities, the first information and the second information is clarified by illustrated in the form of triples, and thus the second information of the first information corresponding to the entity is more easily to be achieved.

With respect to the devices in the above embodiments, the specific manners for performing operations for individual modules and sub-modules therein have been described in details in the embodiments regarding the methods, which will not be elaborated herein.

FIG. 12 is a block diagram of a device 1200 for knowledge base construction, according to an exemplary embodiment. For example, the device 1200 may be a server. The device 1200 includes a processing component 1222 which may further includes one or more processors, and the memory resources presented by memory 1232 for storing the instructions executable by processing component 1222, such as application programs. The application programs stored in memory 1232 may comprise one or more modules; each of them corresponds to a set of instructions. Further, the processing component 1222 may be configured to execute the sets of instructions and perform the method for the knowledge base construction.

The device 1200 may also include a power component 1226 which is configured to perform the power management of device 1200, a wired or wireless network interface 1250 which is configured to enable the device 1200 be connected to the network, and an input/output(I/O) interface 1258. The device 1200 may be operated based on an operating systems stored on memory 1232, such as Windows Server^{™}, Mac OS X^{™}, Unix^{™}, Linux^{™}, FreeBSD^{™}, or the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for knowledge base construction, comprising:
retrieving (S101) text corpuses, and determining whether the text corpuses include first information according to a predefined property description pattern, wherein the first information includes property information of entities in a predefined entity set; and
extracting (S102) first information, if the first information is determined to be included in the text corpuses, and constructing the knowledge base based on the first information and an entity corresponding to the first information.

2. The method for knowledge base construction of claim 1, wherein the predefined property description pattern includes vocabularies, sentence patterns or any combination thereof for determining whether the text corpuses include the first information;
the step of determining whether the text corpuses include the first information according to the predefined property description pattern comprises:
screening out (S401), from the text corpuses, a first sentence set including the entities in the predefined entity set, according to an algorithm for Named Entity Recognition;
retrieving (S402) first candidate information from the first sentence set according to the vocabularies, sentence patterns, or the combination thereof in the predefined property description pattern, wherein the first candidate information includes the property information of the entities in the predefined entity set; and
counting (S403) an occurrence number of the first candidate information, and determining the first candidate information as the first information when the occurrence number is larger than a predefined threshold.

3. The method for knowledge base construction of claim 1, wherein the predefined property description pattern includes vocabularies, sentence patterns or any combination thereof for determining whether the text corpuses include the first information;
the step of determining whether the text corpuses include the first information according to the predefined property description pattern comprises:
screening out (S501), from the text corpuses, a first sentence set including the entities in the predefined entity set according to an algorithm for Named Entity Recognition;
retrieving (S502), from the first sentence set, a plurality of first candidate information according to the predefined property description pattern, wherein the plurality of first candidate information include the property information of the entities;
combining (S503) the entities included in the first sentence set and the corresponding plurality of first candidate information into a set of two-tuples; and
counting (S504)an occurrence number of each of the first candidate information, deleting two-tuples in which the first candidate information whose occurrence number is smaller than a predefined threshold exists, and determining elements included in the current set of two-tuples as the first information.'

4. The method for knowledge base construction of any one of claims 1-3, wherein the method further comprising:
determining (S103) whether the text corpuses include second information according to the predefined property description pattern and the first information, wherein the second information includes the property information of the first information; and
extracting (S104) the second information if it is determined to be included in the text corpuses, and updating the knowledge base based on the first information, the second information, and the entity corresponding to the first information.

5. The method for knowledge base construction of claim 4, wherein the step of determining whether the text corpuses include the second information according to the predefined property description pattern and the first information comprising:
retrieving (S601), from the text corpuses, a second sentence set including the first information according to the predefined property description pattern;
when the second sentence set includes a numerical entity, extracting (S602) the numerical entity as second candidate information;
combining (S603) the entity, the first information and the second information into a set of triples; and
for each of the first information of each entity in the current set of triples, counting (S604) an occurrence number of each of the corresponding second candidate information, and determining second candidate information whose occurrence number is the largest as the second information of the current first information of the current entity.

6. The method for knowledge base construction of any one of claims 1 to 5, wherein the predefined property description pattern includes one or more of: content of *, <contain | contains> <#NUM> grams of *, * is <contained | included | contained rich> <in | within> *, where "*" is a wildcard character for matching any string, "|" is a symbol indicating "or", "<#NUM> " is a symbol for matching a numerical string, and "<" and ">" appear in pairs to contain multiple synonyms.

7. A device for knowledge base construction, comprising:
a retrieving and determining module (71), configured to retrieve text corpuses, and determining whether the text corpuses include a first information according to a predefined property description pattern, wherein the first information includes property information of entities in a predefined entity set; and
a first determining, extracting and adding module (72), configured to extract first information, if the first information is determined to be included in the text corpuses, and construct the knowledge base based on the first information and an entity corresponding to the first information.

8. The device for knowledge base construction of claim 7, wherein the predefined property description pattern includes vocabularies, sentence patterns or any combination thereof for determining whether the text corpuses include the first information;
the retrieving and determining module comprises:
a screening sub-module (711), configured to screen out, from the text corpuses, a first sentence set including the entities in the predefined entity set, according to an algorithm for Named Entity Recognition;
a retrieving sub-module (712), configured to retrieve a first candidate information from the first sentence set according to the vocabularies, sentence patterns, or the combination thereof in the predefined property description pattern, wherein the first candidate information includes the property information of the entities in the predefined entity set; and
a counting and determining sub-module (713), configured to count an occurrence number of the first candidate information, and determine the first candidate information as the first information when the occurrence number is larger than a predefined threshold.

9. The device for knowledge base construction of claim 7, wherein the predefined property description pattern includes vocabularies, sentence patterns or any combination thereof for determining whether the text corpuses include the first information;
the retrieving and determining module comprises:
a screening sub-module (711), configured to screen out, from the text corpuses, a first sentence set including the entities in the predefined entity set according to an algorithm for Named Entity Recognition;
a retrieving sub-module (712), configured to retrieve, from the first sentence set, a plurality of first candidate information according to the predefined property description pattern, wherein the plurality of first candidate information include the property information of the entities;
a combining sub-module (713), configured to combine the entities included in the first sentence set and the corresponding plurality of first candidate information into a set of two-tuples; and
a counting, deleting and determining sub-module (714), configured to count an occurrence number of each of the first candidate information, delete two-tuples in which the first candidate information whose occurrence number is smaller than a predefined threshold exists, and determine elements included in the current set of two-tuples as the first information.

10. The device for knowledge base construction of any one claims 7-9, wherein the device further comprises:
a determining module (73), configured to determine whether the text corpuses include second information according to the predefined property description pattern and the first information, wherein the second information includes the property information of the first information; and
a second determining, extracting and adding module (74), configured to extract the second information if it is determined to be included in the text corpuses, and update the knowledge base based on the first information, the second information, and the entity corresponding to the first information.

11. The device for knowledge base construction of claim 10, wherein the determining module comprises:
a retrieving sub-module (731), configured to retrieve, from the text corpuses, a second sentence set including the first information according to the predefined property description pattern;
an extracting sub-module (732), configured to extract a numerical entity as second candidate information when the second sentence set includes the numerical entity;
a combining sub-module (733), configured to combine the entity, the first information and the second information into a set of triples; and
a counting and determining sub-module (734), configured to for each of the first information of each entity in the current set of triples, count an occurrence number of each of the corresponding second candidate information, and determine second candidate information whose occurrence number is the largest as the second information of the current first information of the current entity.

12. The device for knowledge base construction of any one of claims 7 to 11, wherein the predefined property description pattern includes one or more of: content of *, <contain | contains> <#NUM> grams of *, * is <contained | included | contained rich> <in | within> *, where "*" is a wildcard character for matching any string, "|" is a symbol indicating "or", "<#NUM> " is a symbol for matching a numerical string, and "<" and ">" appear in pairs to contain multiple synonyms.

13. A device for knowledge base construction, comprising:
a processor; and
a memory for storing processor executable instructions;
wherein the processor is configured to:
retrieving text corpuses, and determining whether the text corpuses include first information according to a predefined property description pattern, wherein the first information includes property information of entities in a predefined entity set; and
extracting first information, if the first information is determined to be included in the text corpuses, and constructing the knowledge base based on the first information and an entity corresponding to the first information.

14. A computer program including instructions for executing the steps of a method for knowledge base construction according to any one of claims 1 to 6 when said program is executed by a computer.

15. A recording medium readable by a computer and having recorded thereon a computer program including instructions for executing the steps of a method for knowledge base construction according to any one of claims 1 to 6.
